# EUROPEAN PATENT APPLICATION

(11) **EP 4 477 709 A1**
(43) Date of publication of application: **18.12.2024**
(21) Application number: 23752855.9
(22) Date of filing: 07.02.2023
(51) Int. Cl.: C08L 33/06, C08K 3/30, C08K 5/13, C08K 5/42, C08K 5/49, C08L 51/00

(54) **COMPOSITION AND RESIN MOLDED BODY**

(30) Priority: 10.02.2022 JP 2022019717; 10.02.2022 JP 2022019718
(71) Applicant: Mitsubishi Chemical Corporation, Tokyo 100-8251 (JP)
(72) Inventor: HAMADA, Yujiro, Tokyo 100-8251 (JP)
(74) Representative: Vossius & Partner Patentanwälte Rechtsanwälte mbB
(86) International application number: PCT/JP2023/003952
(87) International publication number: WO 2023/153391

(57) **Abstract**

A composition comprising a(meth)acrylic polymer (A), an antioxidant (B), and a rubber particle (C), wherein a mass ratio of the rubber particle (C)/antioxidant (B) is more than 8 and less than 1000. A method for producing a resin molded article by molding a composition comprising a (meth)acrylic polymer (A), a rubber particle (C), and an antioxidant (B), wherein the composition has a mass ratio of the rubber particle (C)/antioxidant (B) of more than 8 and less than 1000.

## Description

### Technical Field

The present invention relates to a composition and a resin molded article.

### Background Art

(Meth)acrylic resins have excellent appearance, transparency, dimensional stability, and chemical resistance, so they are widely used in many applications such as housing equipment parts such as washstands, bathtubs, flush toilets, and the like; building members; vehicle parts such as vehicle interior and exterior materials, and the like. On the other hand, (meth)acrylic resins have insufficient impact resistance.

In order to improve the impact resistance of a (meth)acrylic resin, a method of strengthening it by adding a rubber component is often used. However, in those containing a rubber component, the resin composition components are significantly eluted when immersed in water, alcohol, or a solvent simulating oil and fat components. For this reason, the applications for which they can be used are limited.

For example, Patent Literature 1 describes a methacrylic resin composition having excellent moldability and impact resistance, wherein the methacrylic resin composition comprises a methacrylic thermoplastic polymer (B) having a specific monomer composition ratio, an acrylic multilayer polymer particle (A) having a specific structure, and a specific additive in combination. However, this resin composition has a problem that a large amount of resin composition components elute when immersed in a solvent.

### Citation List

### Paten Literature

PTL 1: JP 2012-180454 A

### Summary of Invention

### Technical Problem

There is thus a need for a material that satisfies all of transparency, impact resistance, and solvent elution resistance. However, as mentioned above, (meth)acrylic resins have excellent transparency but have problems with impact resistance. A composition containing rubber components to improve impact resistance has a large amount of resin composition components eluted when immersed in a solvent. Therefore, the obtained resin molded article can not be used, for example, as a food packaging container application or as a toy application that may be put into a mouth of a baby.

An object of the present invention is to provide a composition containing a rubber particle for improving impact resistance, which has excellent transparency inherent to a (meth)acrylic resin and excellent solvent elution resistance, and a resin molded article thereof.

### Solution to Problem

The above problem is solved by the present invention below.
[1] A composition comprising a (meth)acrylic polymer (A), an antioxidant (B), and a rubber particle (C), wherein a mass ratio of the rubber particle (C)/antioxidant (B) is more than 8 and less than 1000.
[2] The composition according to [1], wherein the rubber particle (C) is a particle having a two or more -layer structure.
[3] The composition according to [2], wherein the rubber particle (C) is a particle having a three or more -layer structure.
[4] The composition according to any one of [1] to [3], wherein the content ratio of the rubber particle (C) is 1% by mass or more and 90% by mass or less based on a total mass of the composition.
[5] The composition according to any one of [1] to [4], wherein the composition further contains an alkali metal salt of alkylbenzenesulfonic acid and/or a derivative of an alkali metal salt of alkylbenzenesulfonic acid.
[6] The composition according to [5], wherein a number of carbon atoms in the alkyl group of the alkali metal salt of alkylbenzenesulfonic acid is 8 or more and 14 or less.
[7] The composition according to [5] or [6], wherein the alkylbenzenesulfonic acid is dodecylbenzenesulfonic acid.
[8] The composition according to any one of [1] to [7], wherein the composition further contains an alkali metal salt of thiosulfuric acid and/or a derivative of an alkali metal salt of thiosulfuric acid.
[9] The composition according to any one of [1] to [8], wherein the antioxidant (B) is at least one selected from a phenol-based antioxidant, a phosphorus-based antioxidant, and a sulfur-based antioxidant.
[10] The composition according to [9], wherein the antioxidant (B) is a phenol-based antioxidant.
[11] The composition according to any one of [1] to [10], wherein a content ratio of repeating units derived from methyl methacrylate in the (meth)acrylic polymer (A) is 80% by mass or more.
[12] The composition according to any one of [1] to [11], wherein the mass ratio of the rubber particle (C)/antioxidant (B) is 10 or more and 450 or less.
[13] The composition according to [12], wherein the mass ratio of the rubber particle (C)/antioxidant (B) is 20 or more and 350 or less.
[14] The composition according to any one of [1] to [13], wherein the composition is a composition for a food packaging container.
[15] Use of the composition according to any one of [1] to [13] for a food packaging container or a toy.
[16] A resin molded article formed by molding the composition according to any one of [1] to [14].
[17] A food packaging container formed by molding the composition according to any one of [1] to [14].
[18] A toy formed by molding the composition according to any one of [1] to [14].
[19] A method for producing a resin molded article by molding a composition comprising a (meth)acrylic polymer (A), a rubber particle (C), and an antioxidant (B),
   wherein the composition has a mass ratio of the rubber particle (C)/antioxidant (B) of more than 8 and less than 1000.
[20] The method for producing a resin molded article according to [19], wherein the molding is injection molding.
[21] A method for producing a food packaging container, wherein the food packaging container is produced by the method for producing a resin molded article according to [19] or [20].
[22] A method for producing a toy, wherein the toy is produced by the method for producing a resin molded article according to [19] or [20].

### Advantageous Effects of Invention

Since the composition of the present invention and its resin molded article are compositions containing a rubber particle for improving impact resistance, they have excellent transparency inherent to a (meth)acrylic resin, and have a small amount of resin composition components eluted when immersed in a solvent.

Since the composition of the present invention and its resin molded article have a small elution amount of resin composition components when immersed in a solvent, and have excellent impact resistance and transparency, they can be suitably used containers that come into contact with food such as cups, Tupperware, drinking bottles, baby bottles or the like, and toys.

### Brief Description of Drawings

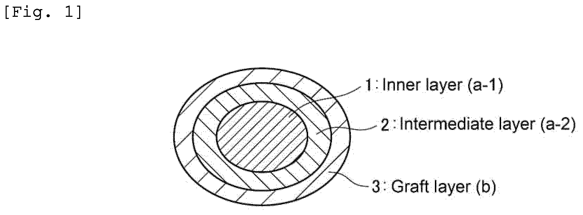

[Fig. 1] Fig. 1 is a schematic cross-sectional view illustrating the outline of the rubber particle (C) according to the present invention.

### Description of Embodiments

The present invention will be described below in detail. The following explanation is an example of the embodiment according to the present invention, and the present invention is not limited to the content of the following description within the bounds of not departing from the scope of the invention.

In the present invention, " (meth)acrylic resin" denotes at least one selected from "acrylic resin" and "methacrylic resin". "(Meth)acrylic polymer" denotes at least one selected from "acrylic polymer" and "methacrylic polymer". "(Meth)acrylate" denotes at least one selected from "acrylate" and "methacrylate". "(Meth)acrylic acid" denotes at least one selected from "acrylic acid" and "methacrylic acid". The same applies to "(meth)acrylonitrile" and "(meth)acrylamide."

In the present invention, "monomer" denotes an unpolymerized compound, and "repeating unit" denotes a unit that is derived from the monomer that is formed due to monomer polymerization. The repeating unit may be a unit directly formed by a polymerization reaction or a unit formed by conversion of a portion of the above-described unit into another structure by treatment of the polymer.

In this specification, "% by mass" and "parts by weight" have the same meaning, and "parts by mass" and "% by weight" have the same meaning. "% by mass" represents a content ratio of a predetermined component contained in a total amount of 100% by mass.

Unless otherwise specified, a numerical range expressed using "to" in this specification means a range that includes the numerical values written before and after "to" as lower and upper limits. For example, "A to B" means equal to or more than A and equal to or less than B.

### [Composition]

The composition of the present invention (hereinafter sometimes referred to as "composition of the present invention") is a composition containing a (meth)acrylic polymer (A), an antioxidant (B), and a rubber particle (C), and the mass ratio of the rubber particle (C)/antioxidant (B) is more than 8 and less than 1000.

### <(meth)acrylic polymer (A)>

The (meth)acrylic polymer (A) is one of the constituent components of the composition of the present invention.

The (meth)acrylic polymer (A) according to the present invention is preferably a homopolymer of methyl methacrylate, or a methyl methacrylate copolymer containing 80% by mass or more and less than 100% by mass of repeating units derived from a methyl methacrylate (hereinafter referred to as "MMA units") based on 100% by mass of the total mass of the (meth)acrylic polymer (A). Methyl methacrylate to be used is generally produced industrially, but methyl methacrylate obtained by recycling (meth)acrylic polymers may also be used.

From the viewpoint of improving the mechanical strength or heat decomposition resistance of the resulting resin molded article, the (meth)acrylic polymer (A) may be a copolymer containing 80% by mass or more and less than 100% by mass of MMA units and more than 0% by mass and 20% by mass or less of repeating units derived from an alkyl (meth)acrylate (M) (hereinafter referred to as "alkyl (meth)acrylate (M) units") other than methyl methacrylate. The copolymer is more preferably a copolymer containing 80% by mass or more and 99.5% by mass or less of MMA units and 0.5% by mass or more and 20% by mass or less of alkyl (meth)acrylate (M) units, more preferably a copolymer containing 90% by mass or more and 98% by mass or less of MMA units and 2% by mass or more and 10% by mass or less of alkyl (meth)acrylate (M) units.

Alternatively, the (meth)acrylic polymer (A) may be a homopolymer of MMA from the viewpoint of improving the transparency of the resulting resin molded article.

Examples of the alkyl (meth)acrylate (M) include the following a).
a) (Meth)acrylate compounds other than methyl methacrylate, such as methyl acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate , tert-butyl (meth)acrylate, n-hexyl (meth)acrylate, cyclohexyl (meth)acrylate, n-octyl (meth)acrylate, 2-ethylhexyl (meth)acrylate, dodecyl (meth)acrylate, tridecyl (meth)acrylate , stearyl (meth)acrylate, phenyl (meth)acrylate, benzyl (meth)acrylate, phenoxyethyl (meth)acrylate, isobornyl (meth)acrylate, glycidyl (meth)acrylate, tetrahydrofurfuryl (meth)acrylate, norbornyl (meth)acrylate, adamantyl (meth)acrylate, dicyclopentenyl (meth)acrylate, dicyclopentanyl (meth)acrylate, tetracyclododecanyl (meth)acrylate, cyclohexanedimethanol mono(meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-methoxyethyl (meth)acrylate, 2-ethoxyethyl (meth)acrylate, 3-methoxybutyl (meth)acrylate, butoxyethyl (meth)acrylate, methoxytriethylene glycol (meth)acrylate, methoxydipropylene glycol (meth)acrylate, 2 - (meth)acryloyloxymethyl-2-methylbicycloheptane, 4-(meth)acryloyloxymethyl-2-methyl-2-ethyl-1,3-dioxolane, 4-(meth)acryloyloxymethyl-2-methyl-2-isobutyl-1,3-dioxolane, and the like.

These alkyl (meth)acrylates (M) may be used alone or in combination of two or more.

Among the alkyl (meth)acrylates (M), methyl acrylate, ethyl acrylate and n-butyl acrylate are more preferred, and methyl acrylate and ethyl acrylate are even more preferred, because it does not easily impair the inherent performance of (meth)acrylic resins and the resulting resin molded article has good heat decomposition resistance, weather resistance, and heat moldability.

The (meth)acrylic polymer (A) according to the present invention may contain monomer units other than MMA units and alkyl (meth)acrylate (M) units that can be copolymerized with these units within a range that does not impair the original properties of the (meth)acrylic polymer (A), for example, in a proportion of 30% by mass or less in the (meth)acrylic polymer (A). Other monomers are not particularly limited as long as they are copolymerizable with methyl methacrylate. Examples of the other monomer include the following b) to h).
b) (Meth)acrylic acid;
c) (Meth)acrylonitrile;
d) (Meth)acrylamide compounds such as (meth)acrylamide, N-dimethyl (meth)acrylamide, N-diethyl (meth)acrylamide, N-butyl (meth)acrylamide, dimethylaminopropyl (meth)acrylamide, N-methylol (meth)acrylamide, N-methoxymethyl (meth)acrylamide, N-butoxymethyl (meth)acrylamide, hydroxyethyl (meth)acrylamide, methylenebis(meth)acrylamide, and the like;
e) Aromatic vinyl compounds such as styrene, α-methylstyrene, and the like;
f) Vinyl ether compounds such as vinyl methyl ether, vinyl ethyl ether, 2-hydroxyethyl vinyl ether, and the like;
g) Vinyl carboxylate compounds such as vinyl acetate, vinyl butyrate, and the like;
h) Olefin compounds such as ethylene, propylene, butene, isobutene, and the like.

The method for producing the (meth)acrylic polymer (A) is not particularly limited, and examples include a bulk polymerization, a suspension polymerization, an emulsion polymerization, a solution polymerization, and the like. Among these polymerization methods, from the viewpoint of excellent productivity, the (meth)acrylic polymer (A) is preferably produced by a bulk polymerization method or a suspension polymerization method, and is more preferably produced by a bulk polymerization method.

The mass average molecular weight of the (meth)acrylic polymer (A) is preferably 20,000 to 200,000, and more preferably 50,000 to 150,000.

When the mass average molecular weight of the (meth)acrylic polymer (A) is equal to or more than the above lower limit, the resulting resin molded article tends to have excellent mechanical properties, and when it is equal to or less than the above upper limit, it tends to have excellent fluidity during melt molding.

In this specification, the mass average molecular weight is a value measured using gel permeation chromatography using standard polystyrene as a standard sample.

The lower limit of the content ratio of the (meth)acrylic polymer (A) contained in a total mass (100 % by mass) of the composition of the present invention is not particularly limited, but is preferably 30 % by mass or more, more preferably 40% by mass or more, and even more preferably 50% by mass or more. On the other hand, the upper limit of the content ratio of the (meth)acrylic polymer (A) is not particularly limited, but is preferably 99% by mass or less, more preferably 90% by mass or more, and even more preferably 80% by mass or more.

The content ratio of the (meth)acrylic polymer (A) in the total mass (100% by mass) of the composition of the present invention is preferably 30% by mass or more and 99% by mass or less, more preferably 50% by mass or more and 90% by mass or less, and even more preferably 60% by mass or more and 80% by mass or less.

When the content ratio of the (meth)acrylic polymer (A) in the total mass (100% by mass) of the composition of the present invention is equal to or more than the above-mentioned lower limit, the resulting resin molded article will not easily impair the inherent properties of the (meth)acrylic resin, such as transparency, heat resistance, and weather resistance. When it is equal to or less than the above-mentioned upper limit, the resulting resin molded article tends to be difficult to impair its impact resistance.

### <Antioxidant (B)>

The antioxidant (B) according to the present invention is not particularly limited, but preferred examples include phenol-based antioxidants, sulfur-based antioxidants, and phosphorus-based antioxidants from the viewpoint of transparency of the resulting resin molded article. Among these, phenol-based antioxidants are more preferred, and hindered phenol-based antioxidants are particularly preferred. These antioxidants may be used alone or in combination of two or more.

A hindered phenol-based antioxidant is a phenol compound having a substituent at the ortho position of the phenol OH group. Examples of hindered phenol-based antioxidant include triethylene glycol-bis[3-(3-t-butyl-5-methyl-4-hydroxyphenyl)propionate], 1,6-hexanediol-bis[3-(3 ,5-di-t-butyl-4-hydroxyphenyl)propionate], 2,4-bis-(n-octyl)-6-(4-hydroxy-3,5-di-t-butylanilino)-1,3,5-triazine, pentaerythrityl-tetrakis [3-(3,5-di-t-butyl-4-hydroxyphenyl)propionate], 2,2-thio-diethylenebis[3-(3,5-di- t-butyl-4-hydroxyphenylpropionate)], octadecyl-3-(3,5-di-t-butyl-4-hydroxyphenyl)propionate, N,N'-hexamethylenebis(3,5-di- t-butyl-4-hydroxyhydrocinnamamide), 3,5-di-t-butyl-4-hydroxybenzylphosphonate-diethyl ester, 1,3,5-trimethyl-2,4,6-tris (3,5-di-t-butyl-4-hydroxybenzyl)benzene, tris-(3,5-di-t-butyl-4-hydroxybenzyl-isocyanurate, octylated diphenylamine, 2,4-bis[(octylthio)methyl]-o-cresol, and isooctyl-3-(3,5-di-t-butyl-4-hydroxyphenyl)propionate.

Among these, octadecyl-3-(3,5-di-t-butyl-4-hydroxyphenyl)propionate (for example, ADEKA STAB AO-50 manufactured by ADEKA) and pentaerythrityl-tetrakis[3-(3,5-Di-t-butyl-4-hydroxyphenyl)propionate] (for example, ADEKA STAB AO-60 manufactured by ADEKA) is preferred.

Examples of phosphorus-based antioxidant include triphenyl phosphite, diphenylisodecyl phosphite, phenyl diisodecyl phosphite, 4,4'-butylidene-bis(3-methyl-6-t-butylphenylditridecyl) phosphite, cyclic neopentanetetrayl bis(nonylphenyl) phosphite, cyclic neopentane tetrayl bis(dinonylphenyl) phosphite, cyclic neopentane tetrayl tris(nonylphenyl) phosphite, cyclic neopentane tetrayl tris(dinonylphenyl)phosphite, 10-(2,5-dihydroxyphenyl)-10H-9-oxa-10-phosphaphenanthrene-10-oxide, diisodecylpentaerythritol diphosphite, tris(2,4-di-t-butylphenyl) phosphite, and the like.

Examples of sulfur-based antioxidant include dilauryl-3,3-thiodipropionate, dimyristyl-3,3-thiodipropionate, distearyl-3,3-thiodipropionate, lauryl-stearyl 3,3-thiodipropionate, pentaerythrityl-tetrakis (3-laurylthiopropionate), and the like. Among these, distearyl-3,3-thiodipropionate (for example, Irganox PS 802FL, manufactured by BASF) is preferable.

The lower limit of the content ratio of the antioxidant (B) in a total mass (100% by mass) of the methacrylic resin composition of the present invention is preferably more than 0.1% by mass, more preferably 0.2% by mass or more, and even more preferably 0.25% by mass or more. The upper limit of the content ratio of the antioxidant (B) is preferably less than 5.0% by mass, more preferably 2.0% by mass or less, and even more preferably 1.5% by mass or less.

The content ratio of the antioxidant (B) in the total mass (100 % by mass) of the methacrylic resin composition of the present invention is preferably more than 0.1 % by mass and less than 5.0 % by mass, more preferably 0.2% by mass or more and 2.0% by mass or less, and even more preferably 0.25% by mass or more and 1.5% by mass or less.

When the content ratio of the antioxidant (B) in the total mass (100% by mass) of the methacrylic resin composition of the present invention is equal to or more than the above-mentioned lower limit, the amount of elution when the resulting resin molded article is immersed in a solvent is small. When it is equal or less than the above-mentioned upper limit, the transparency of the resulting resin molded article will tend to be less likely to be impaired.

### <Rubber particle (C)>

The rubber particle (C) according to the present invention preferably has a two or more -layer structure, and more preferably a three or more -layer structure, from the viewpoint of flexibility of the resulting resin molded article. In the case of a particle having a multilayer structure of two or more layers, it is preferable that the particle has a multilayer structure of two or more layers including at least an inner layer (a) containing at least one selected from methyl methacrylate units, alkyl (meth)acrylate units other than methyl methacrylate units, and aromatic vinyl units; and a graft layer (b) containing methyl methacrylate units from the viewpoint of transparency of the resulting resin molded article.

In the case of a particles having a three or more - layer structure, it is preferable that the particle has an innermost layer (a-1) (hereinafter simply referred to as "inner layer (a-1)") and an intermediate layer (a-2) as the above-mentioned inner layer (a). That is, the particle preferably has a multilayer structure of three or more layers including at least an inner layer (a-1), an intermediate layer (a-2), and a graft layer (b).

The glass transition temperature of the rubber part of the rubber particle (C) is preferably -20°C or lower, more preferably -25°C or lower, even more preferably -30°C or lower, and particularly preferably -35°C or lower.

Fig. 1 shows an example of the multilayer structure including three layers. The layers shown in Fig. 1 includes an inner layer (a-1) 1, an intermediate layer (a-2) 2, and an outer graft layer (b) 3 from the center side.

Hereinafter, each layer of this polymer having a multilayer structure will be explained.

The inner layer (a-1) in the rubber particle (C) according to the present invention may form an inner layer (a-1) containing a crosslinked polymer comprising 40 to 80% by mass, particularly 45 to 70% by mass of methyl methacrylate units; 1 to 60% by mass, particularly 10 to 50% by mass of alkyl (meth)acrylate units other than methyl methacrylate; 0 to 10% by mass, preferably 1 to 7% by mass of aromatic vinyl units; and 0.01 to 1% by mass, particularly 0.02 to 0.8% by mass of copolymerizable crosslinkable monomer units (hereinafter referred to as "polyfunctional monomers").

This inner layer (a-1) can be formed by polymerizing a monomer mixture containing a methyl methacrylate, an alkyl (meth)acrylate other than methyl methacrylate, a copolymerizable crosslinkable monomer, and an aromatic vinyl compound used as necessary to have the above monomer composition.

By setting the composition and content of the monomer constituting the inner layer (a-1) within the above range, excellent impact resistance and transparency can be obtained in the composition of the present invention. In particular, when the amount of alkyl methacrylate whose alkyl group has 1 to 4 carbon atoms is used in an amount of 40% by mass or more in the above monomer mixture, a resin composition having higher transparency can be obtained. In addition, the content of the polyfunctional monomer used in the inner layer (a-1) is preferably 0.01 to 1 parts by mass based on 100 parts by mass of the above monomer mixture in terms of the balance between impact resistance and transparency.

Note that even when it consists of a single monomer, it is conveniently referred to as a "monomer mixture".

As the alkyl (meth)acrylate other than methyl methacrylate used for the alkyl (meth)acrylate unit other than methyl methacrylate in the inner layer (a-1), an alkyl methacrylate in which the alkyl group has 2 to 4 carbon atoms or an alkyl acrylate in which the alkyl group has 1 to 8 carbon atoms is preferable from the viewpoint of transparency of the resulting resin molded article.

Among these, specific examples of alkyl methacrylate in which the alkyl group has 2 to 4 carbon atoms include ethyl methacrylate, propyl methacrylate, n-butyl methacrylate, and the like. These can be used alone or in combination of two or more.

Specific examples of alkyl acrylate in which the alkyl group has 1 to 8 carbon atoms include methyl acrylate, ethyl acrylate, i-propyl acrylate, n-butyl acrylate, 2-ethylhexyl acrylate, and the like. These can be used alone or in combination of two or more. Among these, it is preferable to use n-butyl acrylate.

The aromatic vinyl compound used in the aromatic vinyl unit of the inner layer (a-1) is not particularly limited as long as it can be copolymerized with the above monomer, but examples include aromatic vinyl compounds such as styrene, α-methylstyrene, vinyltoluene, and the like. These can be used alone or in combination of two or more. Among these, it is preferable to use styrene. Note that monomers having two or more copolymerizable functional groups are classified as polyfunctional monomers shown below, and are not classified as aromatic vinyl compounds.

Specific examples of the polyfunctional monomer used in the inner layer (a-1) include ethylene glycol diacrylate, 1,3-butanediol diacrylate, allyl acrylate, ethylene glycol dimethacrylate, 1,3-butanediol diacrylate, allyl methacrylate, triallyl cyanurate, diallyl maleate, divinylbenzene, diallyl phthalate, diallyl fumarate, triallyl trimellitate, and the like. These can be used alone or in combination of two or more. Among these, 1,3-butanediol dimethacrylate and allyl methacrylate are preferably used.

The intermediate layer (a-2) in the rubber particle (C) according to the present invention is preferably a layer including an elastic copolymer having 60 to 99.8% by mass, particularly 70 to 90% by mass of alkyl (meth)acrylate units; 0 to 39.8% by mass, particularly 5.0 to 20.0% by mass of aromatic vinyl units; and 0.2 to 10.0% by mass, particularly 0.5 to 5.0% by mass of copolymerizable crosslinkable monomer (polyfunctional monomer) units. This intermediate layer (a-2) can be formed by polymerizing an alkyl (meth)acrylate, an aromatic vinyl compound, and a polyfunctional monomer to have the above monomer unit composition in the presence of the inner layer (a-1) .

The alkyl (meth)acrylate used for forming the intermediate layer (a-2) is preferably an alkyl acrylate in which the alkyl group has 1 to 8 carbon atoms. Examples of the alkyl acrylate in which the alkyl group has 1 to 8 carbon atoms include those similar to those exemplified as the alkyl acrylate in which the alkyl group has 1 to 8 carbon atoms that can be used in the inner layer (a-1) described above. These can be used alone or in combination of two or more. Among these, it is preferable to use n-butyl acrylate.

Examples of the aromatic vinyl compound used to form the intermediate layer (a-2) include those similar to those exemplified as the aromatic vinyl compound that can be used in the inner layer (a-1) described above. These can be used alone or in combination of two or more. Among these, it is preferable to use styrene.

Examples of the polyfunctional monomer used to form the intermediate layer (a-2) include those similar to those exemplified as the polyfunctional monomer that can be used in the inner layer (a-1) described above. These can be used alone or in combination of two or more. Among these, it is preferable to use 1,3-butanediol dimethacrylate and allyl methacrylate.

The graft layer (b) in the rubber particle (C) according to the present invention is preferably a layer including a non-crosslinkable hard polymer having 70 to 100% by mass, particularly 80 to 100% by mass of methyl methacrylate units; and 1 to 30% by mass, particularly 1 to 20% by mass of alkyl (meth)acrylate units other than methyl methacrylate. This graft layer (b) can be formed by polymerizing methyl methacrylate and an alkyl (meth)acrylate other than methyl methacrylate used as necessary to have the above monomer unit composition in the presence of the polymer formed up to the above-mentioned intermediate layer (a-2), that is, in the presence of the inner layer (a-1)/ intermediate layer (a-2) multilayer structure obtained by polymerizing monomer components in the presence of the inner layer (a-1).

By setting the composition and content of the monomer units constituting the graft layer (b) within the above range, the composition of the present invention can have excellent impact resistance. In particular, when the content of methyl methacrylate units is 70 to 100% by mass, a composition having high impact resistance can be obtained.

As the alkyl (meth)acrylate other than methyl methacrylate used as the alkyl (meth)acrylate unit other than methyl methacrylate in the graft layer (b), an alkyl methacrylate in which alkyl group has 2 to 4 carbon atoms, or an alkyl acrylate in which alkyl group has 1 to 8 carbon atoms is preferred from the viewpoint of transparency of the resulting resin molded article. Examples of such alkyl (meth)acrylate include those similar to those exemplified as alkyl (meth)acrylates other than methyl methacrylate or alkyl acrylates in which the alkyl group has 1 to 8 carbon atoms used in the inner layer (a-1), and preferred ones are also the same.

In addition to the above-mentioned monomers, an aromatic vinyl compound may be used in combination as the monomer constituting the graft layer (b). Specific examples of the aromatic vinyl compound used in the graft layer (b) include those similar to those exemplified as the aromatic vinyl compound that can be used in the inner layer (a-1). These can be used alone or in combination of two or more. Among these, it is preferable to use styrene.

The monomer components for forming the inner layer (a-1), intermediate layer (a-2), and graft layer (b) may contain components other than the monomers described above. Examples of such component include chain transfer agents such as alkyl mercaptans to be used for improving compatibility with the (meth)acrylic polymer (A) serving the matrix resin in the polymerization of these monomer components, particularly in the polymerization of the monomer components to obtain the rubber particle (C), and for improving fluidity and impact resistance. Specific examples of the alkyl mercaptan include n-butyl mercaptan, n-octyl mercaptan, n-dodecyl mercaptan, t-dodecyl mercaptan, and the like. The amount of the chain transfer agent used may be about 0.1 to 2 parts by mass, based on 100 parts by mass of the monomer components used.

The mass ratio (a-1)/(a-2) of the inner layer (a-1) and intermediate layer (a-2) in the rubber particle (C) is preferably 10/90 to 90/10, more preferably 15 /85 to 25/75. When the mass percentage of the inner layer (a-1) in the total mass of the inner layer (a-1) and the intermediate layer (a-2) is 10 or more, whitening is suppressed in case an impact is applied to the resin molded article made of the composition of the present invention. When this ratio is 90 or less, the composition will have sufficient impact resistance.

Further, the content of the graft layer (b) is preferably 30 to 100 parts by mass, and more preferably 50 to 80 parts by mass based on 100 parts by mass of the polymer formed up to the intermediate layer (a-2) in the rubber particle (C) of the present invention. When the content of the graft layer (b) is 30 to 100 parts by mass based on 100 parts by mass of the polymer formed up to the intermediate layer (a-2), the composition of the present invention has sufficient impact resistance.

Here, the mass of each layer is calculated as the sum of the masses of the monomer components constituting each layer.

An example of the method for producing the rubber particle (C) according to the present invention includes a step of obtaining respective latexes of the polymer constituting each layer by emulsion polymerization of the monomer components forming the structural units of the polymer of each layer, and a step of recovering a graft polymer having a multilayer structure therefrom. The emulsion polymerization can be carried out according to known methods.

Examples of the polymerization initiator used in the polymerization reaction for forming the polymer of each layer of the rubber particle (C) include radical polymerization initiators such as peroxides such as benzoyl peroxide, cumene hydroperoxide, t-butyl hydroperoxide, hydrogen peroxide, and the like; azo compounds such as azobisisobutyronitrile, and the like; persulfuric compounds such as potassium persulfate, ammonium persulfate, and the like; perchloric acid compounds; perboric acid compounds, and the like. These may be used alone or in combination of two or more.

Initiators such as these peroxides may also be used as a redox initiator in combination with a reducing agent such as alkali metal salts of sulfite, alkali metal salts of thiosulfuric acid, sodium formaldehyde sulfoxylate, ascorbic acid, hydroxyacetonic acid, ferrous sulfate, a complex of sodium ferrous sulfate and ethylenediaminetetraacetic acid, and the like.

In particular, it is preferable to use an alkali metal salt of thiosulfuric acid such as sodium thiosulfate from the viewpoint of transparency of the resulting resin molded article. Therefore, the composition obtained by using the above-mentioned initiator contains a compound derived from the initiator. From the viewpoint of the amount of elution when the resulting resin molded article is immersed in a food-like solvent, the composition contains preferably an alkali metal salt of thiosulfuric acid and/or a derivative of an alkali metal salt of thiosulfuric acid.

The amount of these radical polymerization initiators added can be appropriately selected depending on the type and blending ratio of the radical polymerization initiator used and the monomer components, and, for example, it may be about 0.01 to 10 parts by mass based on 100 parts by mass of the monomer components.

In the emulsion polymerization of the monomer components constituting the polymer of each layer to obtain the rubber particle (C), any of anionic, cationic, and nonionic emulsifiers can be used. Among these, anionic emulsifiers are particularly preferred.

Examples of anionic emulsifier include carboxylates such as potassium oleate, sodium stearate, sodium myristate, sodium N-lauroyl sarcosinate, dipotassium alkenylsuccinate, and the like; sulfate ester salts such as sodium lauryl sulfate, and the like; sulfonic acid salts such as sodium dioctyl sulfosuccinate, sodium alkylbenzene sulfonate, sodium alkyl diphenyl ether disulfonate, and the like; and phosphate ester salts such as sodium polyoxyethylene alkyl ether phosphate, and the like. These may be used alone or in combination of two or more.

In particular, it is preferable to use an alkali metal salt of alkylbenzenesulfonic acid, especially sodium alkylbenzenesulfonate, from the viewpoint of the amount of elution when the resulting resin molded article is immersed in a food-like solvent. The number of carbon atoms in the alkyl group of the alkali metal salt of alkylbenzenesulfonic acid used is preferably 8 or more and 14 or less. As the alkali metal salt of alkylbenzenesulfonic acid, it is most preferable to use sodium dodecylbenzenesulfonate.

Therefore, the composition obtained by using the above-mentioned emulsifier contains a compound derived from the emulsifier. From the viewpoint of the elution amount when the obtained resin molded article is immersed in a food-like solvent, the composition preferably contains an alkali metal salt of alkylbenzenesulfonic acid, and more preferably contains an alkali metal salt of dodecylbenzenesulfonic acid.

Various methods such as an acid coagulation method, a salt coagulation method, a freeze coagulation method, a spray drying method, and the like can be used to recover the multilayered polymer from the latex. Examples of the recovery agent used in the salt coagulation method include inorganic salts such as aluminum chloride, aluminum sulfate, sodium sulfate, magnesium sulfate, sodium nitrate, calcium acetate, and the like. Calcium acetate is particularly preferred in order to suppress coloring of a resin molded article obtained by molding a composition using the recovered multilayered rubber particle (C) as an impact strength modifier.

These recovery agents can be used as an aqueous solution. The concentration of the recovery agent in the recovery agent aqueous solution is preferably 0.1 to 20% by mass, and more preferably 1 to 15% by mass. When the concentration of the recovery agent in the recovery agent aqueous solution is 0.1% by mass or more, it is possible to stably recover the rubber particle (C), and when the concentration is 20% by mass or less, a large amount of recovery agent is not mixed in the recovered multilayer structure rubber particle (C), and in a resin molded article made of a composition containing this rubber particle (C), deterioration in performance such as increased coloring can be suppressed.

The collected rubber particle (C) can be dried and obtained as a powder. After the rubber particle (C) are dried and obtained as a powder, a lubricant such as silica gel fine particles may be added to and mixed with the rubber particle (C) in order to suppress blocking of the rubber particle (C) and improve handling properties.

The mass average particle diameter of the polymer of the inner layer (a-1) of the rubber particle (C) according to the present invention is preferably 150 to 250 nm, and particularly preferably 170 to 200 nm. When the mass average particle diameter of the polymer of the inner layer (a-1) is equal to or more than the above-mentioned lower limit, the resulting resin molded article will have good impact resistance, and when it is equal to or less than the above-mentioned upper limit, the resulting resin molded article will have good transparency.

The mass average particle diameter of the polymer in which the intermediate layer (a-2) is further formed on the inner layer (a-1) is preferably 220 to 300 nm, and particularly preferably 240 to 280 nm. When the mass average particle diameter of the polymer forming up to the intermediate layer (a-2) is equal to or more than the above-mentioned lower limit, the resulting resin molded article will have good impact resistance, and when it is equal to or less than the above-mentioned upper limit, the resultant resin molded article will have good transparency.

The mass average particle diameter of the rubber particle (C) of the present invention formed by forming the inner layer (a-1), the intermediate layer (a-2) and the graft layer (b) is preferably 240 to 400 nm, particularly preferably 260 to 320 nm. When the mass average particle diameter of the rubber particle (C) is equal to or more than the above-mentioned lower limit, the resulting resin molded article will have good impact resistance, and when it is equal to or less than the above-mentioned upper limit, the resulting resin molded article will have good transparency.

Here, the mass average particle diameters of the inner layer (a-1), rubber particle (C), and the like are values measured by the method described in the Examples section below.

The lower limit of the content ratio of the rubber particle (C) contained in the total mass (100% by mass) of the composition of the present invention is not particularly limited, but is preferably 1% by mass or more, more preferably 10% by mass or more, and even more preferably 20% by mass or more. On the other hand, the upper limit of the content ratio of the rubber particle (C) is not particularly limited, but is preferably 90% by mass or less, more preferably 70% by mass or less, and even more preferably 50% by mass or less.

The content ratio of the rubber particle (C) in the total mass (100% by mass) of the composition of the present invention is preferably 1% by mass or more and 90% by mass or less, more preferably 10% by mass or more and 70% by mass or less, and even more preferably 20% by mass or more and 50% by mass or less.

When the content ratio of the rubber particle (C) in the total mass (100% by mass) of the composition of the present invention is equal to or more than the above-mentioned lower limit, the impact resistance of the resulting resin molded article can be improved, and when it is equal to or less the above-mentioned upper limit, the original properties of (meth)acrylic resin such as transparency, heat resistance, and weather resistance can be sufficiently maintained in the resulting resin molded article, and the amount of elution when immersed in a solvent tends to be small.

### [Mass ratio of rubber particle (C)/antioxidant (B)]

In the composition of the present invention, the ratio expressed by [mass ratio of the rubber particle (C)/antioxidant (B)] is more than 8 and less than 1000.

From the viewpoint of transparency, the [mass ratio of the rubber particle (C)/antioxidant (B)] is less than 1000, preferably 450 or less, more preferably 350 or less, even more preferably 250 or less, and particularly preferably 230 or less. On the other hand, from the viewpoint of scratch resistance, the [mass ratio of the rubber particle (C)/antioxidant (B)] is more than 8, preferably 10 or more, more preferably 20 or more, even more preferably 30 or more, and particularly preferably 35 or more.

The above-mentioned preferable upper limits and preferable lower limits can be arbitrarily combined. For example, the [mass ratio of the rubber particle (C)/antioxidant (B)] is in the range of more than 8 and less than 1000, preferably 10 or more and 450 or less, more preferably 20 or more and 350 or less, even more preferably 30 or more and 250 or less, and particularly preferably 35 or more and 230 or less.

Although the mechanism of the effect of the present invention by setting the [mass ratio of the rubber particle (C)/antioxidant (B)] within the above range is not fully clear, it is thought to be as follows.

By mixing the antioxidant (B) and the rubber particle (C) with the (meth)acrylic polymer (A) within the above ratio range, the amount of elution when immersed in a solvent can be reduced. It is thought to be as follows. The more rubber particle (C) are contained in the composition of the present invention, the more radicals and inert substances derived from the resin composition are generated in the composition by receiving light and heat energy. It is thought that the radicals cut or decompose the polymer chains in the composition, so when the resulting resin molded article is immersed in a solvent, the amount of elution increases. In this respect, it is thought that by setting the [mass ratio of the rubber particle (C)/antioxidant (B)] to a range of less than 1000, the antioxidant (B) captures the radicals and inert substances generated in the composition, and can suppress the amount of elution when the resulting resin molded article is immersed in a solvent. On the other hand, by setting the [mass ratio of the rubber particle (C)/antioxidant (B)] to a range more than 8, it becomes possible to suppress the elution of the antioxidant (B) itself or prevent the influence of the color of the antioxidant (B) itself, and maintain the transparency of the resulting resin molded article.

### <Other components >

The composition of the present invention may contain other components than the above-mentioned (meth)acrylic polymer (A), antioxidant (B), and rubber particle (C) within a range that does not impair the purpose of the present invention.

Other components that may be contained in the composition of the present invention include ultraviolet absorbers, light stabilizers, mold release agents, pigments, dyes, and the like.

These other components can be contained in the composition of the present invention in a range of 5.0% by mass or less.

### <Alkali metal salt of alkylbenzenesulfonic acid/alkali metal salt of thiosulfuric acid>

In the production of the rubber particle (C) according to the present invention, when an alkali metal salt of alkylbenzenesulfonic acid and an alkali metal salt of thiosulfuric acid are used as an emulsifier and a polymerization initiator, respectively, an alkali metal salt of alkylbenzenesulfonic acid and/ or a derivative of an alkali metal salt of alkylbenzenesulfonic acid and an alkali metal salt of thiosulfuric acid and/or a derivative of an alkali metal salt of thiosulfuric acid are contained in the rubber particle (C) and therefore in the composition of the present invention.

The content of the alkali metal salt of alkylbenzenesulfonic acid and/or the derivative of the alkali metal salt of alkylbenzenesulfonic acid in the composition of the present invention is preferably 0.01 to 10.0% by mass, and particularly preferably 0.05 to 5.0% by mass. When the content of the alkali metal salt of alkylbenzenesulfonic acid and/or the derivative of the alkali metal salt of alkylbenzenesulfonic acid is equal to or more than the above-mentioned lower limit, the latex stability during polymerization is good, and when it is equal to or less than the above-mentioned upper limit, the resulting resin molded article will have good transparency.

Further, the content of the alkali metal salt of thiosulfuric acid and/or the derivative of the alkali metal salt of thiosulfuric acid in the composition of the present invention is preferably 0.001 to 5.0% by mass, and particularly preferably 0.005 to 1.0% by mass. When the content of the alkali metal salt of thiosulfuric acid and/or the derivative of the alkali metal salt of thiosulfuric acid is equal to or least than the above-mentioned lower limit, the elution amount when the resulting resin molded article is immersed in a solvent can be suppressed to a small level, and when it is equal to or less than the above-mentioned upper limit, the resulting resin molded article will have good transparency.

In the present invention, when the composition contains an alkali metal salt of alkylbenzenesulfonic acid and/or a derivative of an alkali metal salt of alkylbenzenesulfonic acid and an alkali metal salt of thiosulfuric acid and/or a derivative of an alkali metal salt of thiosulfuric acid, the composition has a small amount of elution of the resin composition components when immersed in a solvent, and excellent transparency and impact resistance. The reason for this is presumed to be as follows.

The alkali metal salt of alkylbenzenesulfonic acid used as an emulsifier during the production of the rubber particle (C) has a small critical micelle concentration and the amount of the emulsifier required for production of the rubber particle (C) is small. For this reason, it is presumed that the amount of elution of the emulsifier when immersed in a solvent can be suppressed to a small level. The derivative of alkylbenzenesulfonic acid has excellent thermal stability and does not generate substances that promote the decomposition of the (meth)acrylic polymer (A) and the rubber particle (C). For this reason, it is presumed that the amount of elution of the composition components when immersed in a solvent can be suppressed to a small level.

The alkali metal salt of thiosulfuric acid acts as a reducing agent and produces an alkali metal salt of sulfite and an alkali metal salt of sulfuric acid when oxidized by a redox reaction. But the reaction proceeds without producing substances that promote the decomposition of the (meth)acrylic polymers (A) and the rubber particle (C). Therefore, it is presumed that the amount of elution of the resin composition components when immersed in a solvent is suppressed to a small level.

### <Method for producing composition>

The composition of the present invention can be produced by blending the above-mentioned (meth)acrylic polymer (A), antioxidant (B), and rubber particle (C), and other components used as necessary in a predetermined blending ratio.

In this producing method, there is no particular restriction on the mixing order of the (meth)acrylic polymer (A), antioxidant (B), rubber particle (C), and other components used as necessary. The components may be mixed all at once, each component may be mixed one after another, or some components may be mixed in advance and then mixed with other components.

### <Ultraviolet maximum absorbance>

The composition of the present invention has a small elution amount of resin composition components when immersed in a solvent, and preferably satisfies the following (I).
(I) The ultraviolet maximum absorbance of the extract obtained by extracting a resin molded article made of the composition of the present invention at a temperature of 120 degrees Fahrenheit for 24 hours using an 8% by mass ethanol aqueous solution as an extraction solvent in accordance with 21 CFR, Part 177, section 177.1010 of the U.S. Food and Drug Administration (FDA) is less than 1.5.

That is, when the ultraviolet maximum absorbance of the above-mentioned extract is large, a large amount of resin composition components are eluted into the extract. However, the composition of the present invention has the ultraviolet maximum absorbance of less than 1.5, and elution of resin composition components from the composition is suppressed. The ultraviolet maximum absorbance of (I) above is preferably 1.0 or less, more preferably 0.95 or less, and even more preferably 0.90 or less.

### <Application>

The composition of the present invention has a small amount of elution of resin composition components when immersed in a solvent, and has excellent impact resistance and transparency, so it is particularly suitable for use in a food packaging container application, or a toy application that may be put into a mouth of a baby, and more particularly suitable for use in a food packaging container application.

### [Resin molded article]

By molding the composition of the present invention, it is possible to obtain an acrylic resin molded article that has a small amount of elution of the resin composition components when immersed in a solvent and has excellent transparency and impact resistance.

Examples of the molding method for molding the composition of the present invention to obtain the resin molded article of the present invention include an injection molding, an extrusion molding, a pressure molding, and the like. The obtained resin molded article may be further subjected to a secondary molding such as an air pressure molding or a vacuum molding. Among these, an injection molding is particularly preferred because it can accommodate even complex shapes.

Molding conditions such as a molding temperature and a molding pressure may be set as appropriate.

The resin molded article of the present invention made of the composition of the present invention preferably has excellent transparency such that the yellow index of a molded piece having a thickness of 3 mm measured in accordance with ISO 17223 is 1.5 or less. This yellow index is more preferably 1.4 or less, and even more preferably 1.3 or less.

The resin molded article of the present invention has a small amount of elution of resin composition components when immersed in a solvent, and has excellent impact resistance and transparency, so it is suitable for use in a food packaging container application such as cups, Tupperware, drinking bottles, baby bottles, and the like, and a toy application that may be put into a mouth of a baby.

### Example

Hereinafter, the present invention will be specifically described in more detail with reference to Examples, Comparative Examples, and Reference Example. The present invention is not limited to these Examples.

In addition, in the Examples, "parts" and "%" mean "parts by mass" and "% by mass" unless otherwise specified.

Abbreviations, various measurement and evaluation methods in Examples, Comparative Examples, and Reference Example are as follows.

### <Abbreviation>

SFS: Sodium formaldehyde sulfoxylate
Na₂S₂O₃: Sodium thiosulfate (Na thiosulfate)
ST: Styrene
BA: n-butyl acrylate
AMA: Allyl methacrylate
TBHP: t-butyl hydroperoxide
MMA: Methyl methacrylate
nOM: n-octyl mercaptan
MA: Methyl acrylate
Emulsifier (D-1): Sodium dodecylbenzenesulfonate
Emulsifier (D-2): Polyoxyethylene alkyl ether phosphate ester salt
(Meth)acrylic polymer (A-1): Acrypet (registered trademark) VH (manufactured by Mitsubishi Chemical Corporation, mass average molecular weight: 80,000)

### <Mass average particle diameter of rubber particle (C)>

The mass average particle diameter of the rubber particle (C) was measured as follows. The obtained latex was diluted with distilled water to obtain a diluted latex having a solid content concentration of approximately 3%. Using 0.1 ml of the diluted latex as a sample, a measurement was performed using a particle size distribution analyzer manufactured by MATEC Company in the United States, model CHDF2000, at a flow rate of 1.4 ml/min. , a pressure of about 2.76 MPa (about 4000 psi), and a temperature of 35°C. In the measurement, a capillary cartridge for particle separation and a carrier liquid were used, and the liquid was kept almost neutral. Before the measurement, a calibration curve was created by measuring the total 12 points of particle diameter from 20 nm to 800 nm using monodisperse polystyrene of known particle diameter manufactured by DUKE Corporation in the United States as a standard particle diameter material.

### <Preparation of test piece for dissolution test>

After each resin composition obtained in Examples, Comparative Examples, and Reference Example was dried with hot air at 80°C for about 4 hours, it was injection molded using an injection molding machine (model name: EC75SXIII-2A, manufactured by Toshiba Machine Co., Ltd.) under the conditions of a cylinder temperature of 280°C and a mold temperature of 60°C to obtain a resin molded article having a length of 100 mm, a width of 100 mm, and a thickness of 3 mm. Then, in accordance with Part 177, section 177.1010 of Title 21 of the Code of Federal Regulations (21 CFR) of the United States Food and Drug Administration (FDA), the sample was cut to 2.5 inches × 0.85 inches to obtain a test piece for elution test.

### <Elution test>

As an indicator of the amount of resin composition components eluted into food, the ultraviolet maximum absorbance of the extract when immersed in a solvent was measured using an ultraviolet-visible spectrophotometer (model name: UV-1850, manufactured by Shimadzu Corporation). Extraction was performed at a temperature of 120 degrees Fahrenheit for 24 hours using an 8% by mass aqueous ethanol solution as the extraction solvent in accordance with US Food and Drug Administration (FDA) 21 CFR Part 177, section 177.1010.

### <Transparency: Yellow Index (YI)>

As an indicator of molding coloration, the yellow index (YI) of the resin molded article prepared for the above elution test was measured using a spectroscopic color difference meter (model name: SE-7700, manufactured by Nippon Denshoku Kogyo Co., Ltd.) in accordance with ISO17223. The closer the value is to 0, the better the transparency. When the YI value was 2.0 or less, it was evaluated good and indicated by "∘", and when it exceeded 2.0, it was evaluated bad and indicated by "x".

### <Impact resistance: Charpy impact strength test>

After each resin composition obtained in Examples, Comparative Examples, and Reference Example was dried with hot air at 80°C for about 4 hours, it was injection molded using an injection molding machine (model name: EC75SXIII-2A, manufactured by Toshiba Machine Co., Ltd.) under the conditions of a cylinder temperature of 250°C and a mold temperature of 60°C to obtain a molded piece for Charpy impact test having a length of 80 mm, a width of 10 mm, and a thickness of 4 mm.

As an indicator of impact resistance, a notched Charpy impact strength (kJ/m²) of a resin molded article was measured using a digital impact tester (model name: DG-UB, manufactured by Toyo Seiki Seisaku-sho, Ltd.) at a temperature of 23°C in accordance with ISO 179-1. The larger the Charpy impact strength, the better the impact resistance.

When it was 2.0 or more, it was evaluated as good and indicated by "o", and when it was less than 2.0, it was evaluated as bad and indicated by "x".

### [Production Example 1: Production of acrylic rubber particle (C-1)]

The following component 1 was charged in a 5-necked flask equipped with a stirrer, a reflux condenser, a nitrogen inlet, a monomer addition port, and a thermometer.

### (Component 1)

| | |
|---|---|
| Deionized water | 168 parts |

Next, the temperature of the system was raised to 80°C while stirring mixing and purging with nitrogen, and the following component 2 was added.

### (Component 2)

| | |
|---|---|
| Ferrous sulfate | 8.0 × 10⁻⁴ parts |
| Disodium ethylenediaminetetraacetate | 2.4 × 10⁻³ parts |
| Na₂S₂O₃ | 0.50 parts |

After 5 minutes, a mixture (a-1) having the following composition for an inner layer (a-1) was added over 2 hours, and kept at 80°C for 1 hour to complete the polymerization of the polymer for the inner layer (a-1). The polymerization rate (measured by gas chromatography for unreacted monomers, the same applies hereinafter) of the obtained latex (A-1) was 99% or more, and the mass average particle diameter of the polymer for the inner layer (a-1) was 190 nm.

### (Mixture (a-1))

| | |
|---|---|
| MMA | 22.0 parts |
| BA | 16.0 parts |
| ST | 2.0 parts |
| AMA | 0.2 parts |
| TBHP | 0.07 parts |
| Emulsifier (D-1) ) | 1.0 parts |

Subsequently, a solution of 0.3 parts of SFS in 3.0 parts of deionized water was added to the latex (A-1) and held for 15 minutes, and then a mixture (a-2) having the following composition for an intermediate layer (a-2) was added dropwise over 180 minutes and maintained for 2 hours to complete the polymerization of the polymer of the intermediate layer (a-2). The polymerization rate of the obtained latex (A-2) was 99% or more, and the mass average particle diameter of the polymer forming up to the intermediate layer (a-2) was 260 nm.

### (Mixture (a-2))

| | |
|---|---|
| BA | 49.0 parts |
| ST | 11.0 parts |
| AMA | 1.2 parts |
| TBHP | 0.4 parts |

Subsequently, a solution of 0.3 parts of SFS in 3.0 parts of deionized water was added to the latex (A-2) and held for 15 minutes, and then a mixture (b) having the following composition for a graft layer (b) was added dropwise over 120 minutes and maintained for 1 hour to complete the polymerization of the polymer of the graft layer (b). The polymerization rate of the obtained final latex (B) was 99% or more.

### (Mixture (b))

| | |
|---|---|
| MMA | 53.0 parts |
| BA | 6.0 parts |
| ST | 1.0 parts |
| TBHP | 0.4 parts |
| nOM | 0.18 parts |

Subsequently, 300 parts of a 1.3% calcium acetate aqueous solution was charged as a recovery agent aqueous solution into a stainless steel container, and the temperature was raised to 80°C while stirring mixing, and 300 parts of the latex (B) were continuously added over 10 minutes. Thereafter, the temperature was raised to 92°C and held for 5 minutes. The obtained product was cooled to room temperature and filtered by centrifugal dehydration (1300G, 3 minutes) while washing with deionized water to obtain a wet resin. The obtained resin was dried at 75°C for 48 hours to obtain white powdery acrylic rubber particle (C-1) .

The mass average particle diameter of the acrylic rubber particle (C-1) was 280 nm.

### [Production Example 2]

### <Production of acrylic rubber particle (C-2)>

Acrylic rubber particle (C-2) were obtained using the same method and composition as in Production Example 1, except that Na₂S₂O₃ was changed to SFS and the emulsifier was changed to emulsifier (D-2).

The mass average particle diameter of the acrylic rubber particle (C-2) was 280 nm.

### [Antioxidant (B)]

As the antioxidant, the following antioxidants (B-1) to (B-3) were used.

### <Antioxidant (B-1)>

"ADEKA STAB AO-60" manufactured by ADEKA represented by the following structural formula

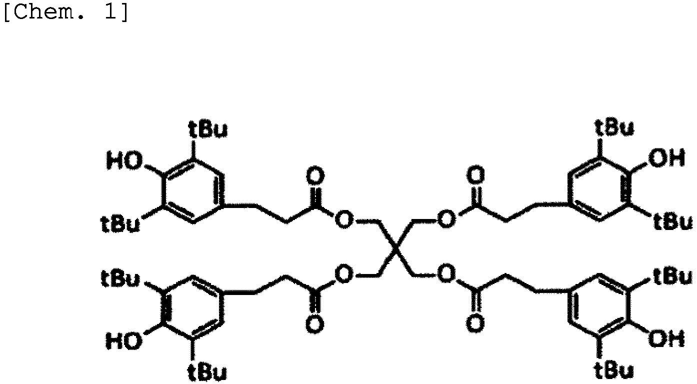

<Antioxidant (B-2)>

"ADEKA STAB AO-50" manufactured by ADEKA represented by the following structural formula

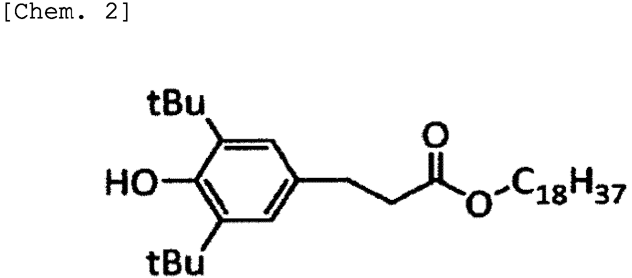

### <Antioxidant (B-3)>

"Irganox PS 802FL" manufactured by BASF represented by the following structural formula

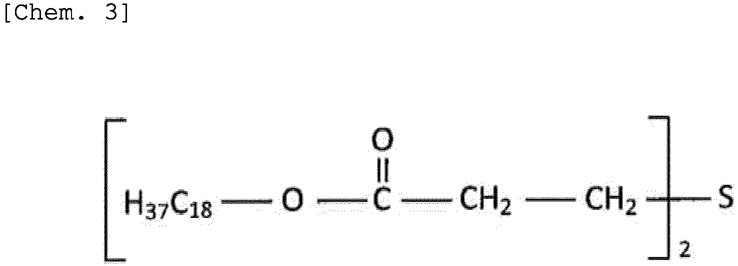

### [Example 1]

60 parts of the (meth)acrylic polymer (A-1), 40 parts of the acrylic rubber particle (C-2), and 0.5 parts of the antioxidant (B-1) were mixed in a twin screw extruder (model name "PCM30", L/D=25, manufactured by Ikegai Corporation) and kneaded at a barrel temperature of 250°C, a die temperature of 250°C, and a screw rotation speed of 250 rpm to obtain a pellet-like composition. The evaluation results of the obtained composition are shown in Table 1A.

### [Examples 2 to 18, Comparative Examples 1 to 11]

A composition was obtained by the same method as in Example 1, except that the antioxidant (B) and the rubber particle (C) were changed to the types and contents shown in Table 1A, 1B, 2A, or 2B, or except that the antioxidant (B) was not used and the rubber particle (C) shown in Table 1B or 2B was used in the amount shown in Table 1B or 2B. The evaluation results for each composition are shown in Tables 1A, 1B, 2A, and 2B.

### [Reference Example 1]

A composition was obtained by the same method as in Example 1, except that the acrylic rubber particle (C-1) were not used. The evaluation results of the obtained compositions are shown in Tables 1B and 2B.

### [Table 1A]

**<Table1A>**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Composition Formulation | (Meth)acrylic polymer (A) | | Part by mass | 60 | 60 | 60 | 60 | 60 | 60 | 60 | 60 | 60 |
| | Rubber particle (C) | (C-1) | Part by mass | - | - | - | - | - | - | - | - | - |
| | | (C-2) | Part by mass | 40 | 40 | 40 | 40 | 40 | 40 | 40 | 40 | 40 |
| | Antioxidant (B) | (B-1) | Part by mass | 0. 5 | - | - | 0. 1 | - | - | 1. 0 | - | - |
| | | (B-2) | Part by mass | - | 0.2 | - | - | 0.1 | - | - | 1.0 | - |
| | | (B-3) | Part by mass | - | - | 0. 5 | - | - | 0. 1 | - | - | 1. 0 |
| Mass Ratio of Rubber Particle (B)/Antioxidant (C) | | | - | 80 | 200 | 80 | 400 | 400 | 400 | 40 | 40 | 40 |
| Evaluation Results | Elution Test (Maximum Ultraviolet Absorbance) | | Measured Value | 1.21 | 1.24 | 1.19 | 1.58 | 1.53 | 1.61 | 1.20 | 1.13 | 1.32 |
| | Impact Resistance | | Measured Value (kJ/m²) | 4.8 | 4.7 | 4.8 | 4.8 | 4.8 | 4.7 | 4.8 | 4.9 | 4.8 |
| | | | Evaluation | ○ | ○ | ○ | ○ | ○ | ○ | ○ | ○ | ○ |
| | Transparency (YI Value) | | Measured Value (%) | 1.3 | 1.3 | 1.3 | 1.1 | 0.9 | 1.0 | 1. 4 | 0.9 | 1. 5 |
| | | | Evaluation | ○ | ○ | ○ | ○ | ○ | ○ | ○ | ○ | ○ |

### [Table 1B]

**<Table 1B>**

| | | | | Example 10 | Example 11 | Example 12 | Comparative Example 1 | Comparative Example 2 | Comparative Example 3 | Comparative Example 4 | Comparative Example 5 | Reference Example 1 |
|---|---|---|---|---|---|---|---|---|---|---|---|---|
| Composition Formulation | (Meth)acrylic polymer (A) | | Part by mass | 60 | 60 | 60 | 60 | 60 | 60 | 60 | 60 | 100 |
| | Rubber particle (C) | (C-1) | Part by mass | 40 | 40 | 40 | - | 40 | - | - | - | - |
| | | (C-2) | Part by mass | - | - | - | 40 | - | 40 | 40 | 40 | - |
| | Antioxidant (B) | (B-1) | Part by mass | 0.5 | - | - | - | - | 5.0 | - | - | 0.5 |
| | | (B-2) | Part by mass | - | 0.2 | - | - | - | - | 5.0 | - | - |
| | | (B-3) | Part by mass | - | - | 0.5 | - | - | - | - | 5.0 | - |
| Mass Ratio of Rubber Particle (B)/Antioxidant (C) | | | - | 80 | 200 | 80 | - | - | 8 | 8 | 8 | - |
| Evaluation Results | Elution Test (Maximum Ultraviolet Absorbance) | | Measured Value | 0.90 | 0.96 | 0.83 | 1.65 | 1.06 | 1.36 | 1.77 | 1.55 | 0.53 |
| | Impact Resistance | | Measured Value (kJ/m²) | 4.7 | 4.7 | 4.7 | 4.8 | 4.7 | 4.8 | 4.8 | 4.8 | 1.4 |
| | | | Evaluation | ○ | ○ | ○ | ○ | ○ | ○ | ○ | ○ | × |
| | Transparency (YI Value) | | Measured Value (%) | 1.2 | 1.1 | 1.2 | 1.2 | 0.8 | 2.5 | 1.0 | 19.0 | 0.5 |
| | | | Evaluation | ○ | ○ | ○ | ○ | ○ | × | ○ | × | ○ |

### [Table 2A]

**<Table 2A>**

| | | | | Example 13 | Example 14 | Example 15 | Example 16 | Example 17 | Example 18 |
|---|---|---|---|---|---|---|---|---|---|
| Composition Formulation | (Meth)acrylic polymer (A) | | Part by mass | 80 | 50 | 30 | 80 | 50 | 30 |
| | Rubber particle (C) | (C-1) | Part by mass | 20 | 50 | 70 | - | - | - |
| | | (C-2) | Part by mass | - | - | - | 20 | 50 | 70 |
| | Antioxidant (B) | (B-1) | Part by mass | 0. 5 | 0. 5 | 0. 5 | 0. 5 | 0. 5 | 0. 5 |
| | | (B-2) | Part by mass | - | - | - | - | - | - |
| | | (B-3) | Part by mass | - | - | - | - | - | - |
| Mass Ratio of Rubber Particle (B)/Antioxidant (C) | | | - | 40 | 100 | 140 | 40 | 100 | 140 |
| Evaluation Results | Elution Test (Maximum Ultraviolet Absorbance) | | Measured Value | 0.53 | 1.21 | 2.69 | 0.70 | 2.37 | 2.91 |
| | Impact Resistance | | Measured Value (kJ/m²) | 2. 4 | 5. 5 | 7. 0 | 2. 5 | 5. 4 | 7. 1 |
| | | | Evaluation | ○ | ○ | ○ | ○ | ○ | ○ |
| | Transparency (YI Value) | | Measured Value (%) | 0.9 | 1.6 | 1.9 | 0.8 | 1.4 | 1.7 |
| | | | Evaluation | ○ | ○ | ○ | ○ | ○ | ○ |

### [Table 2B]

**<Table 2B>**

| | | | | Comparative Example 6 | Comparative Example 7 | Comparative Example 8 | Comparative Example 9 | Comparative Example 10 | Comparative Example 11 | Reference Example 1 |
|---|---|---|---|---|---|---|---|---|---|---|
| Composition Formulation | (Meth)acrylic polymer (A) | | Part by mass | 80 | 50 | 30 | 80 | 50 | 30 | 100 |
| | Rubber particle (C) | (C-1) | Part by mass | 20 | 50 | 70 | - | - | - | - |
| | | (C-2) | Part by mass | - | - | - | 20 | 50 | 70 | - |
| | Antioxidant (B) | (B-1) | Part by mass | - | - | - | - | - | - | 0.5 |
| | | (B-2) | Part by mass | - | - | - | - | - | - | - |
| | | (B-3) | Part by mass | - | - | - | - | - | - | - |
| Mass Ratio of Rubber Particle (B)/Antioxidant (C) | | | - | - | - | - | - | - | - | - |
| Evaluation Results | Elution Test (Maximum Ultraviolet Absorbance) | | Measured Value | 0.74 | 1.46 | 2.82 | 0.88 | 2.72 | 3.04 | 0.53 |
| | Impact Resistance | | Measured Value (kJ/m²) | 2. 4 | 5. 6 | 6. 5 | 2. 4 | 5. 5 | 6. 5 | 1. 4 |
| | | | Evaluation | ○ | ○ | ○ | ○ | ○ | ○ | × |
| | Transparency (YI Value) | | Measured Value (%) | 0.7 | 1.6 | 1.8 | 0.8 | 1.4 | 1.9 | 0.5 |
| | | | Evaluation | ○ | ○ | ○ | ○ | ○ | ○ | ○ |

### <Evaluation results>

The following can be seen from Tables 1A and 1B.

The compositions and resin molded articles of Examples 1 to 12 had a small amount of elution upon contact with a solvent, and also had excellent impact resistance and transparency.

The compositions and resin molded articles of Comparative Examples 1 and 2 did not contain the antioxidant (B), so they had good transparency, but an amount of elution upon contact with a solvent was large.

The compositions of Comparative Examples 3 to 5 in which the mass ratio of the rubber particle (C)/antioxidant (B) was small had insufficient transparency or a large amount of elution upon contact with a solvent.

Since Reference Example 1 did not contain the rubber particles (C), the elution amount was small and the transparency was excellent, but the impact resistance is poor.

The following can be seen from Tables 2A and 2B.

The compositions and resin molded articles of Examples 13 to 18 had a small amount of elution upon contact with a solvent, and also had excellent impact resistance and transparency.

The compositions and resin molded articles of Comparative Examples 6 to 11 had the same base as those of Examples 13 to 18 (the mass parts of the (meth)acrylic polymer (A) and the rubber particles (C) were the same), but did not contain the antioxidant (B), so they had good transparency, but the amount eluted upon contact with the solvent was large.

Since Reference Example 1 did not contain the rubber particle (C), the elution amount was small and the transparency was excellent, but the impact resistance was poor.

Although preferred embodiments and examples of the present invention have been described above, the present invention is not limited to these embodiments and examples. Additions, omissions, substitutions, and other changes to the configuration are possible without departing from the spirit of the present invention.

Moreover, the present invention is not limited by the foregoing description, but only by the scope of the appended claims.

The present application is based on Japanese Patent Application No. 2022-019717 and Japanese Patent Application No. 2022-019718 filed on February 10, 2022, which are incorporated herein by reference in their entirety.

### Industrial Applicability

The composition of the present invention and its resin molded article have a small elution amount of resin composition components when immersed in a solvent, and have excellent impact resistance and transparency, so they can be suitably used as a food packaging container application such as cups, Tupperware, drinking bottles, baby bottles, or as a toy application that may be put into a mouth of a baby.

### Reference Signs List

- 1: Inner layer (a-1)
- 2: Intermediate layer (a-2)
- 3: Graft layer (b)

## Claims

1. A composition comprising a (meth)acrylic polymer (A), an antioxidant (B), and a rubber particle (C), wherein a mass ratio of the rubber particle (C)/antioxidant (B) is more than 8 and less than 1000.

2. The composition according to claim 1, wherein the rubber particle (C) is a particle having a two or more - layer structure.

3. The composition according to claim 2, wherein the rubber particle (C) is a particle having a three or more - layer structure.

4. The composition according to any one of claims 1 to 3, wherein the content ratio of the rubber particle (C) is 1% by mass or more and 90% by mass or less based on a total mass of the composition.

5. The composition according to any one of claims 1 to 4, wherein the composition further contains an alkali metal salt of alkylbenzenesulfonic acid and/or a derivative of an alkali metal salt of alkylbenzenesulfonic acid.

6. The composition according to claim 5, wherein a number of carbon atoms in the alkyl group of the alkali metal salt of alkylbenzenesulfonic acid is 8 or more and 14 or less.

7. The composition according to claim 5 or 6, wherein the alkylbenzenesulfonic acid is dodecylbenzenesulfonic acid.

8. The composition according to any one of claims 1 to 7, wherein the composition further contains an alkali metal salt of thiosulfuric acid and/or a derivative of an alkali metal salt of thiosulfuric acid.

9. The composition according to any one of claims 1 to 8, wherein the antioxidant (B) is at least one selected from a phenol-based antioxidant, a phosphorus-based antioxidant, and a sulfur-based antioxidant.

10. The composition according to claim 9, wherein the antioxidant (B) is a phenol-based antioxidant.

11. The composition according to any one of claims 1 to 10, wherein a content ratio of repeating units derived from methyl methacrylate in the (meth)acrylic polymer (A) is 80% by mass or more.

12. The composition according to any one of claims 1 to 11, wherein the mass ratio of the rubber particle (C)/antioxidant (B) is 10 or more and 450 or less.

13. The composition according to claim 12, wherein the mass ratio of the rubber particle (C)/antioxidant (B) is 20 or more and 350 or less.

14. The composition according to any one of claims 1 to 13, wherein the composition is a composition for a food packaging container.

15. Use of the composition according to any one of claims 1 to 13 for a food packaging container or a toy.

16. A resin molded article formed by molding the composition according to any one of claims 1 to 14.

17. A food packaging container formed by molding the composition according to any one of claims 1 to 14.

18. A toy formed by molding the composition according to any one of claims 1 to 14.

19. A method for producing a resin molded article by molding a composition comprising a (meth)acrylic polymer (A), a rubber particle (C), and an antioxidant (B),
wherein the composition has a mass ratio of the rubber particle (C)/antioxidant (B) of more than 8 and less than 1000.

20. The method for producing a resin molded article according to claim 19, wherein the molding is injection molding.

21. A method for producing a food packaging container, wherein the food packaging container is produced by the method for producing a resin molded article according to claim 19 or 20.

22. A method for producing a toy, wherein the toy is produced by the method for producing a resin molded article according to claim 19 or 20.
